Europäisches Patentamt

European Patent Office

Office européen des brevets

(11) Publication number: **0 300 464 B1**

# EUROPEAN PATENT SPECIFICATION

(45) Date of publication of patent specification: **03.11.93**  (51) Int. Cl.5: **H04K 1/04**

(21) Application number: **88111711.3**

(22) Date of filing: **20.07.88**

(54) **Voice band splitting scrambler.**

(30) Priority: **21.07.87 JP 182080/87**

(43) Date of publication of application:
**25.01.89 Bulletin 89/04**

(45) Publication of the grant of the patent:
**03.11.93 Bulletin 93/44**

(84) Designated Contracting States:
**CH DE FR GB LI**

(56) References cited:
**EP-A- 0 139 496
DE-B- 1 273 002
FR-A- 960 038**

(73) Proprietor: **FUJITSU LIMITED**
**1015, Kamikodanaka**
**Nakahara-ku**
**Kawasaki-shi Kanagawa 211(JP)**

(72) Inventor: **Torii, Naoya**
**Suifukan 201**
**55-5, Shiratoridai**
**Midori-ku**
**Yokohama-shi Kanagawa 227(JP)**
Inventor: **Akiyama, Ryota**
**3-26-15, Nishiogikita**
**Suginami-ku Tokyo 167(JP)**
Inventor: **Azuma, Mitsuhiro**
**Fujitsu Haitsu B-227**
**3-12-3 Miyamaedaira**
**Miyamae-ku Kawasaki-shi Kanagawa 213(JP)**

(74) Representative: **Lehn, Werner, Dipl.-Ing. et al**
**Hoffmann, Eitle & Partner,**
**Patentanwälte,**
**Postfach 81 04 20**
**D-81904 München (DE)**

**Description**

BACKGROUND OF THE INVENTION

(1) Field of the Invention

The present invention relates to a voice band splitting scrambler. Particularly, the present invention relates to a band splitting scrambler (hereinafter, voice scrambler) having a constitution for collectively carrying out a spectrum inverting process of respective band-split channels to realize a simplification of the hardware.

(2) Description of the Related Arts

As a voice scrambler for realizing scrambled voice communications, an apparatus utilizing a band splitting and band relocation system is in practical use. This apparatus divides a speech frequency band into equal parts and relocates the divided parts. When relocating, the apparatus inverts and shifts predetermined bands. Such a device is shown in FR-A-0 960 038.

As a conventional voice scrambler, the HW13 of the MARCONI Co. is known and disclosed in "Explanation of Scrambled Voice Apparatus", Suurikagaku (mathematical science), December, 1975.

This conventional apparatus has a disadvantage of a large amount of hardware or a construction containing too many elements, because the spectrum inverting process and the band relocating process of the split bands are carried out by separate elements, as later described in more detail with reference to the drawings.

SUMMARY OF THE INVENTION

An object of the present invention is to solve the problem of the conventional apparatus by providing a voice band splitting scrambler wherein the number of multipliers is reduced and thus the hardware is simplified.

According to a first aspect of the present invention, there is provided a voice band splitting scrambler, comprising band splitting means for splitting an input voice signal into a plurality of band channels; and a scrambled voice signal generating means for carrying out spectrum-inverting and band-relocating operations on the respective channels to generate a scrambled voice signal, said scrambled voice signal generating means including: modulating means for band-relocating respective channels by noninverting carriers or inverting carriers set in different bands respectively; and adding means for adding signals of noninverted channels and signals of inverted channels to each other, characterized by means for modulating a sum of a plurality of inverted channel signals, or means for modulating a sum of a plurality of inverted and non-inverted channel signals.

According to a second aspect of the invention, there is provided a voice band splitting scrambler comprising a first n-frequency modulating means for modulating an input analog voice signal into respective different frequencies; first bandpass filters (BPF) for passing predetermined band signals from the respective outputs of said first n-frequency modulating means, a second n-frequency modulating means for modulating the respective output signals of said bandpass filters (BPF), a switching means for separately outputting noninverted signals and inverted signals from the output signals of said second n-frequency modulating means, a first adding means for adding the noninverting signals output from said switching means, a second adding means for adding the inverted signals output from said switching means, a second bandpass filter for filtering the output of said second adding means, a third modulating means for frequency modulating the output from said second bandpass filter, and a third adding means for adding the noninverted signals and the signals output from said third frequency modulating means to output the added signals.

According to a third aspect of the invention, there is provided a voice band splitting scrambler comprising: a first n-frequency modulating means for modulating input analog voice signals into respective different frequencies, first bandpass filters (BPF) for passing predetermined band signals from the respective outputs of said first n-frequency modulating means, second n-frequency modulating means for modulating the respective output signals of said bandpass filters (BPF), adding means for adding the outputs of said second n-frequency modulating means, a second bandpass filter for filtering the output of said adding means, a third modulating means for frequency modulating the output of said second bandpass filter, and a low-pass filter for passing a predetermined relocated signal within the input voice band width from the output signal of said third frequency modulating means.

BRIEF DESCRIPTION OF THE DRAWINGS

The above object and features of the present invention will be more apparent from the following description of the preferred embodiments with reference to the drawings, wherein:

Fig. 1 is a block diagram showing a principle of an embodiment of the present invention;

Fig. 2 is a block diagram showing a detailed constitution of the first embodiment of the present invention;

Figs. 3A to 3C are views explaining the relationships of carrier frequencies and multiplier outputs;

Figs. 4A to 4E are views showing an example of band splitting process for reducing the order of a bandpass filter ($BPF_2$);

Figs. 5A to 5D are views explaining signal spectra corresponding to Table 2;

Figs. 6A to 6E are views corresponding to Table 2a for explaining signal spectra at the outputs of the multiplexers 231 to 235;

Figs. 7A to 7E are views corresponding to Table 2a for explaining signal spectra after the adders 251 and 253;

Figs. 8A to 8D are views explaining signal spectra corresponding to Table 4;

Figs. 9A to 9D are views explaining a process in which no inverted carriers are prepared;

Fig. 10 is a block diagram showing a constitution of a second embodiment of the present invention;

Figs. 11A to 11G are views explaining signal spectra corresponding to Table 6;

Figs. 12A and 12B are views explaining schematically a band splitting and relocating system;

Fig. 13 is a block diagram showing a constitution of a conventional voice band splitting scrambler;

Fig. 14 is a view showing an example of an output spectrum of a bandpass filter ($BPF_{11}$) 603;

Figs. 15A to 15E are views showing examples of output spectra of multipliers 611 to 615;

Figs. 16A to 16C are views explaining non-inverting and inverting processes of the prior art;

Figs. 17A to 17E are views explaining the noninverting and the inverting processes of the prior art for each channel in more detail;

Fig. 18 is a view showing an example of a conventional band relocating portion; and,

Figs. 19A to 19G are views explaining the band relocating process and scrambled voice outputs of the prior art.

DESCRIPTION OF THE PREFERRED EMBODIMENTS

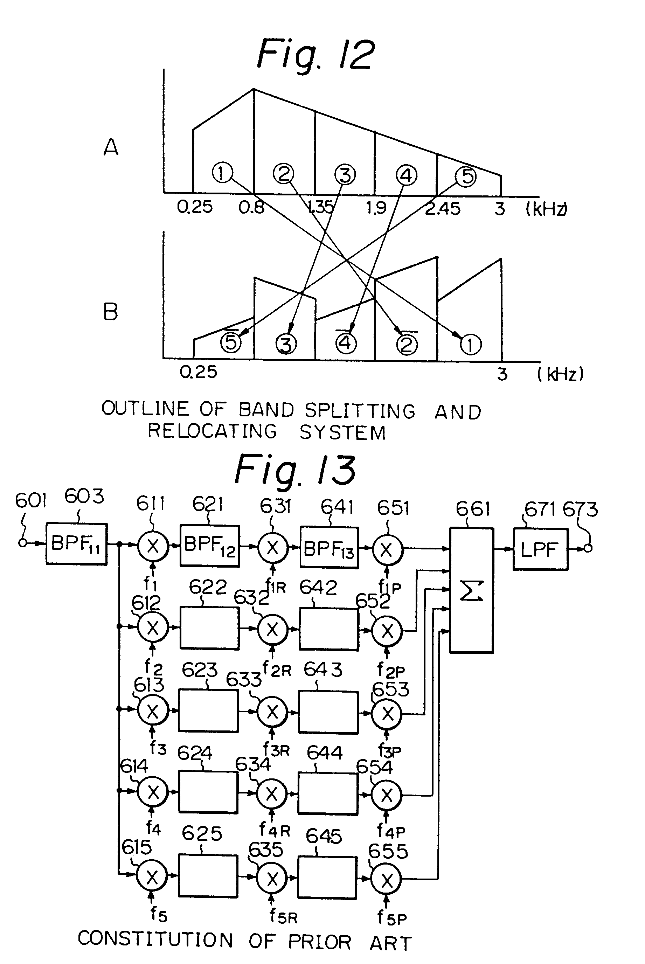

For a better understanding of the present invention, a conventional voice scrambler apparatus and the problems therein will be first described with reference to Figs. 12 to 19.

Figures 12A and 12B are views explaining an outline of the band splitting and relocating system.

A speech frequency band (0.25 kHz to 3.0 kHz in a radio communication) is split by five into channels ① to ⑤ each having a band width of 550 Hz.

Note that a speech frequency band in a telephone communication ranges from 0.3 kHz to 3.3 kHz. In this case, each of the five split band widths is 600 Hz. In the following description of the conventional device, the speech frequency band from 0.25 kHz to 3.0 kHz is used.

The channels are relocated in the order of $\overline{⑤}$ , ③ , $\overline{④}$ , $\overline{②}$ and ① to provide a scrambled voice signal, and the channels ② (0.8 kHz to 1.35 kHz), ④ (1.9 kHz to 2.45 kHz) and ⑤ (2.45 kHz to 3.0 kHz) are spectrum-inverted.

Figure 13 is a block diagram showing an apparatus that realizes the band splitting and relocating system for splitting a speech frequency band into five channels and relocating the channels. The conventional example shown here is that disclosed as a scrambled voice apparatus HW13 of the MARCONI Co., ("Explanation of Scrambled Voice Apparatus", Suurikagaku (mathematical science), December, 1975).

In the figure, a voice signal input to an input terminal 601 is filtered by a bandpass filter ($BPF_{11}$) 603 to a frequency band from 250 Hz to 3000 Hz and input to multipliers 611 to 615 for channels ① to ⑤. In the multipliers 611 to 615 corresponding to the respective channels, the filtered voice signal (250 Hz to 3000 Hz) is modulated with carriers $f_1$ (4050 Hz), $f_2$ (4600 Hz), $f_3$ (5150 Hz), $f_4$ (5700 Hz) and $f_5$ (6250 Hz), respectively. The channels are filtered to 3250 Hz to 3800 Hz with bandpass filters ($BPF_{12}$) 621 to 625. Signals of the respective bandlimited channels correspond to signals obtainable by splitting the voice signal, which has been band-limited by the bandpass filter 603, by five.

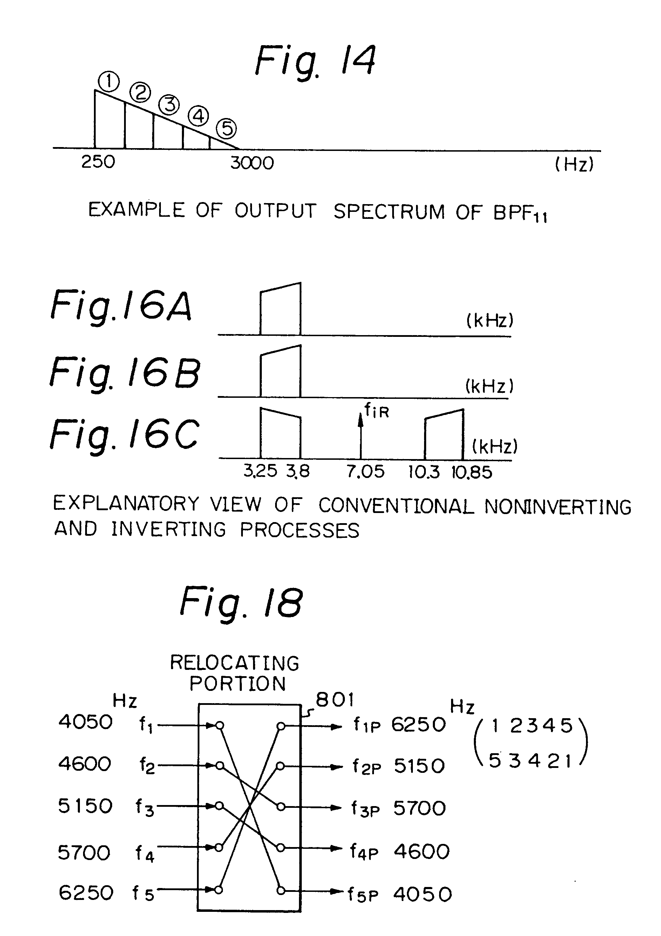

Figure 14 is a view showing an example of the output spectrum of the bandpass filter 603. The voice signal is assumed to have a continuous spectrum in the frequency band of from 250 Hz to 3000 Hz.

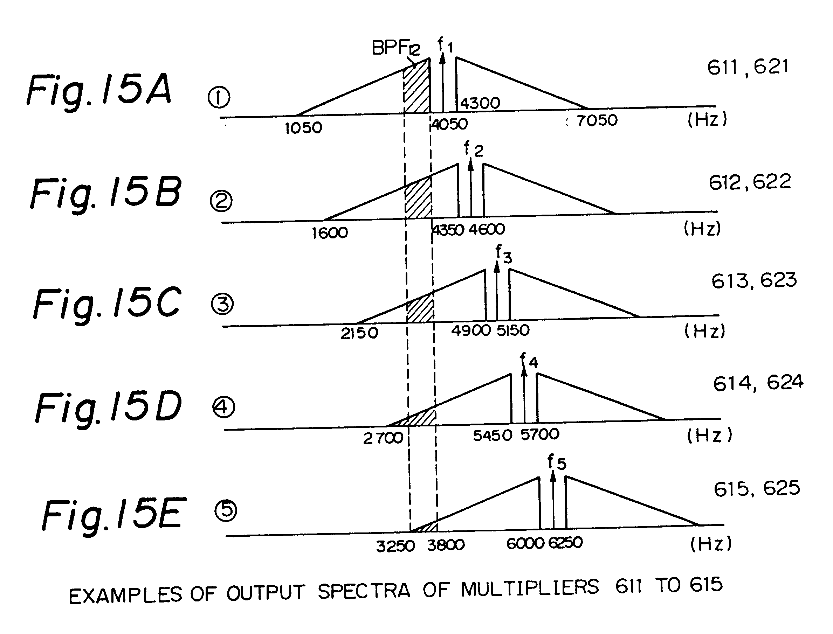

Figures 15A to 15E are views showing examples of output spectra of the multipliers 611 to 615 corresponding to the respective channels. In the respective channels, the voice signal (250 Hz to 3000 Hz) is modulated by the carriers $f_1$ to $f_5$. For example, in the channel ①, the signal is modulated with the carrier $f_1$ (4050 Hz) in the multiplier 611 to form a lower sideband from 1050 (4050 - 3000) Hz to 3800 (4050 - 250) Hz and an upper sideband from 4300 (4050 + 250) Hz to 7050 (4050 + 3000) Hz. Other channels are processed in a similar way.

Hatched portions in the lower sidebands indicate output spectra of the bandpass filters 621 to 625.

The outputs of the bandpass filters 621 to 625 are inverted by multipliers 631 to 635 and bandpass filters (BPF$_{13}$) 641 to 645. Namely, with respect to the channels ⓘ (i = 1 to 5), carriers (frequencies $f_{iR}$) of direct current components ($f_{iR}$ = 0 Hz) are input to the multipliers 631 to 635 for a non-inversion process, and those of sine waves are input for an inversion process.

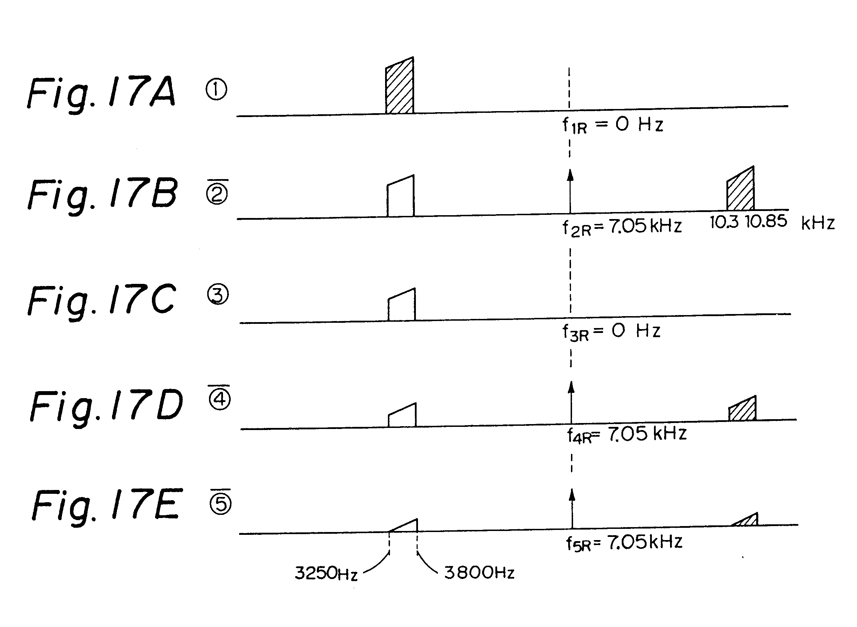

Figure 16A is a view showing an example of an output spectrum of one of the bandpass filters 621 to 625. With respect to this output spectrum, Fig. 16B is a view showing an output spectrum of one of the multipliers 631 to 635 for the noninverting process ($f_{iR}$ = 0 Hz), and Figure 16C is a view showing an output spectrum of one of the multipliers 631 to 635 for the inversion process ($f_{iR}$ = 7.05 kHz).

Accordingly, to obtain the noninverted channels ① and ③ and the inverted channels ②, ④ and ⑤ as shown in Fig. 12, as an example, it is sufficient to supply the carrier frequencies $F_{2R}$, $F_{4R}$ and $F_{5R}$ equal to 7.05 kHz, while the carrier frequencies $f_{1R}$ and $f_{3R}$ are set to 0 Hz, as shown in Figs. 17A to 17E.

After the noninverting process or inverting process, the signals are filtered by bandpass filters 641 to 645 to a frequency band from 3.25 kHz to 3.8 kHz, and therefore, an upper sideband (10.3 kHz to 10.85 kHz) at the time of inversion process is blocked.

The signals are then modulated by multipliers 651 to 655 to required bands and relocated. The relocating process is carried out by properly combining the carriers $f_1$ (4050 Hz), $f_2$ (4600 Hz), $f_3$ (5150 Hz), $f_4$ (5700 Hz) and $f_5$ (6250 Hz) and assigning them to $f_{ip}$ (i = 1 to 5). Then, the signals of the respective channels are modulated to a base band (250 Hz to 3000 Hz), and synthesized in an adder 661.

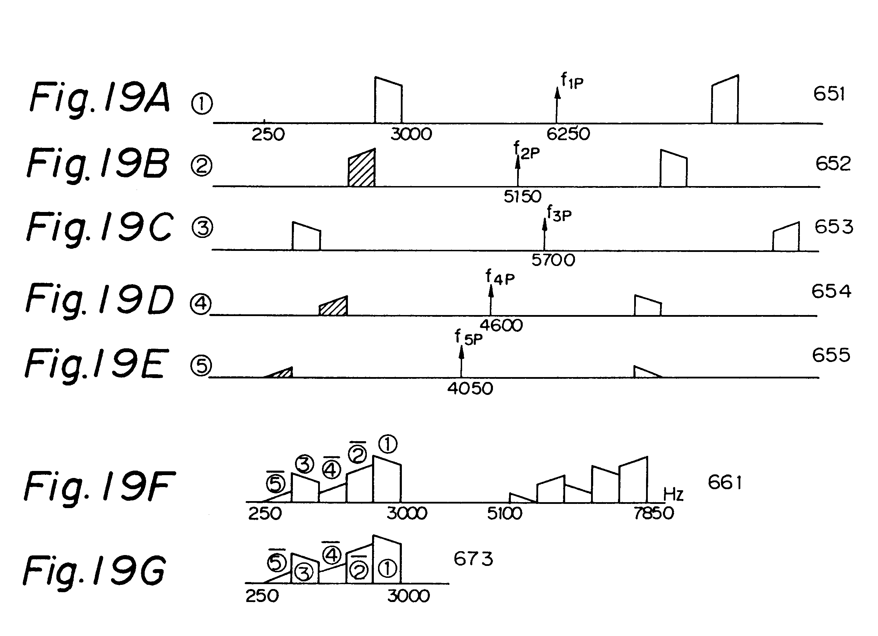

Figure 18 is a view showing an example of combination of the carriers $f_i$ of the multipliers 611 to 615 and the carriers $f_{ip}$ of the multipliers 651 to 655.

The combination is determined according to a predetermined logic in a relocating portion 801.

By the example shown in Fig. 18, the relocated channels from the low frequency band to the high frequency band are the original channels ⑤, ③, ④, ②, and ①.

Figures 19A to 19E are views showing output spectra of signals relocated (or modulated) by the multipliers 651 to 655.

Figure 19F is a view showing output spectra of signals added by the adder 661.

Figure 19G is a view showing an output spectrum of signals added in the adder 661 according to the assignment.

The channels ②, ④ and ⑤ are inverted in the multipliers 632, 634 and 635 and the bandpass filters 642, 644 and 645, respectively.

A low-pass filter 671 blocks an upper sideband (5100 Hz to 7850 Hz) of the signals which have been modulated by the multipliers 651 to 655 and added to each other by the adder 661, and outputs a lower sideband (250 Hz to 3000 Hz) of the signals as a scrambled voice signal to an output terminal 673.

As described above, according to the conventional voice scrambler apparatus, the inversion and relocation processes of the spectra of split bands are carried out separately by using the multipliers 631 to 635 and 651 to 655, and thus a problem arises in that the number of components including the bandpass filters 641 to 645 for blocking an upper sideband at the time of inversion process is increased.

Further, because the carrier frequencies for inversion and relocating process are too high, the number of poles of the bandpass filters in the conventional system is so large that it is difficult to obtain sharp cut off characteristics of the bandpass filters.

Embodiments of the present invention will now be described.

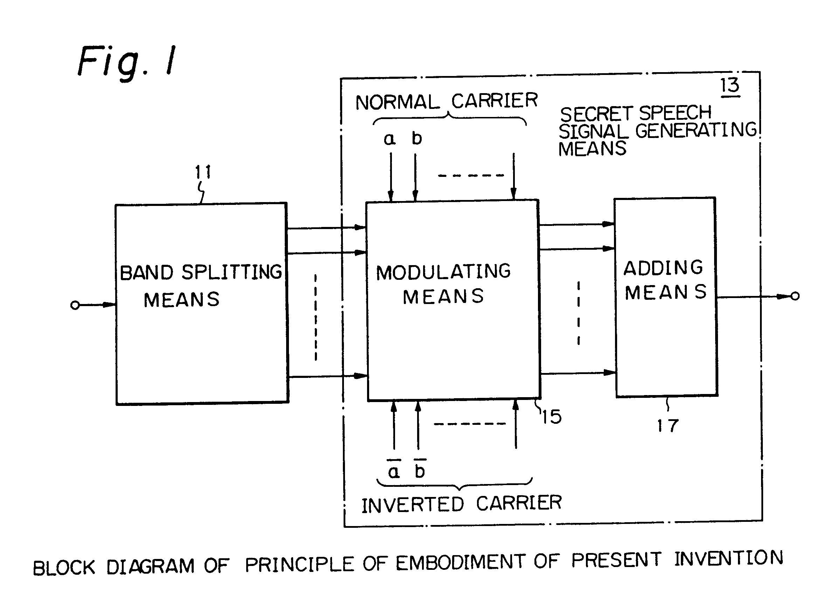

Figure 1 is a block diagram showing a principle of an embodiment of the present invention.

In the figure, a band splitting unit 11 splits an input voice signal into a plurality of band channels.

A modulating unit 15 relocates the bands of respective channels by the use of noninverting carriers or inverting carriers that are set in different bands respectively.

An adding unit 17 adds the signals of the noninverted channels and signals of the inverted channels to each other.

The modulating unit 15 and the adding unit 17 form a scrambled voice signal generating unit 13 for performing spectrum-inverting and band-relocating operations with respect to the respective channels to generate a scrambled voice signal.

Preferably, the adding unit 17 includes an adding device for adding the signals of noninverted channels to each other and adding the signals of inverted channels to each other, and a device for modulating at least one of the added signals and adding the signals of both of the channels to form a continuous spectrum.

Alternatively, preferably the noninverting carriers and inverting carriers are set such that the band of an upper sideband of a signal modulated by one of the carriers coincides with the band of a lower sideband of a signal modulated by the other of the carriers.

In operation, the modulating unit 15 relocates the bands of respective channels with the noninverting carriers or the inverting carriers which are set in the different bands respectively. The adding unit 17 adds the signals of the noninverted channels and the signals of the inverted channels to each other, and as a result, the signals of the noninverted channels and the signals of the inverted channels are collectively processed, thus allowing a reduction of the number of multipliers conventionally needed for the spectrum inverting process.

For example, by adding the noninverted channel signals to each other and adding the inverted channel signals to each other, and by modulating at least one of the added signals such that a continuous spectrum is formed when the one added signal is added to the other added signal, a collective process of the noninverted channel signals and the inverted channel signals is realized.

Alternatively, the noninverted carriers and inverted carriers are set such that the band of an upper sideband of a signal modulated by one of the carriers coincides with the band of a lower sideband of a signal modulated by the other of the carriers. By adding signals of the noninverted channels and signals of inverted channels to each other, the band-relocating process and the spectrum-inverting process can be performed simultaneously.

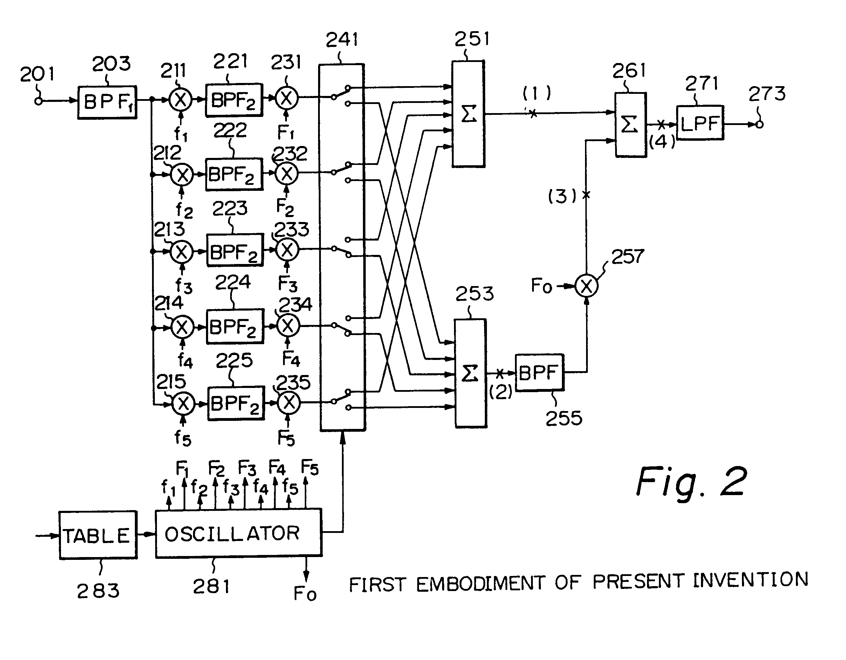

Figure 2 is a block diagram showing a detailed constitution of the first embodiment of the present invention.

A voice signal input to an input terminal 201 is input to multipliers 211 to 215 through a bandpass filter (BPF$_1$) 203. Carriers $f_1$ to $f_5$ having different frequencies respectively are input to the multipliers 211 to 215, and multiplied by the band-limited voice signal. The outputs of the multipliers 211 to 215 are input to multipliers 231 to 235 through bandpass filters (BPF$_2$) 221 to 225, respectively, and carriers $F_1$ to $F_5$ having different frequencies respectively are input to the multipliers 231 to 235, for multiplication. The outputs of the multipliers 231 to 235 are input to an adder 251 or an adder 253 through a switching circuit 241, an output of the adder 253 is input into a multiplier 257 through a bandpass filter (BPF$_3$) 255, an output multiplied by a carrier $F_0$ of the multiplier 257 is input together with an output of the adder 251 into an adder 261, and an output of the adder 261 is sent to an output terminal 273 through a low-pass filter (LPF) 271.

An oscillator 281 selects predetermined frequencies according to set values of a table 283 to send the carriers to the multipliers 211 to 215, 231 to 235 and 257 as well as sending a switching control signal to the switching circuit 241.

The band splitting unit 11 in the block diagram shown in Fig. 1 showing the principle of the embodiment of the present invention includes the bandpass filter 203, multipliers 211 to 215, and bandpass filters 221 to 225 in Fig. 2. Similarly, the modulating means 15 includes the multipliers 231 to 235, oscillator 281, and table 283, and the adding unit 17 includes the switching circuit 241, adders 251 and 253, bandpass filter 255, multiplier 257, and adder 261.

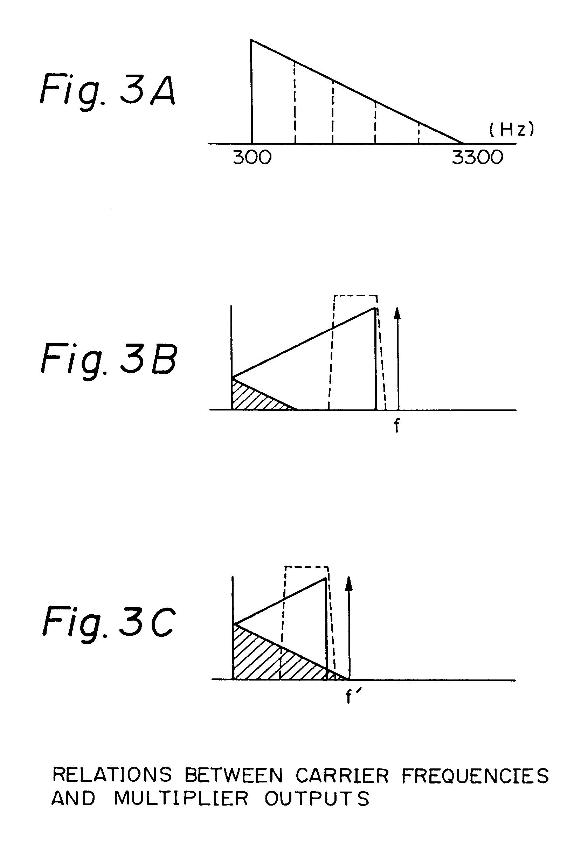

In this embodiment, an explanation will be made for a case in which a voice signal band-limited in the bandpass filter 203 to a band from 300 Hz to 3300 Hz is split by five (a band of each channel being 600 Hz) (Fig. 3A)

It is, of course, possible to split a band from 250 Hz to 3000 Hz as shown in Fig. 12.

The multipliers 211 to 215 corresponding to the respective channels modulate the voice signal (300 Hz to 3300 Hz) with the carriers $f_1$ to $f_5$. The respective channels of the modulated signal are filtered through the bandpass filters 221 to 225 so that the bands of the respective channels are properly arranged.

The number of poles of the bandpass filters 221 to 225 may be reduced by reducing the center frequencies of the filters, if the filters have the same characteristics. Therefore, by setting the carrier frequencies of the multipliers 211 to 215 low enough that the outputs of the bandpass filters are not distorted due to reflected signal components which are called as an "aliasing" noise, the number of the poles of the bandpass filters 221 to 225 may be reduced.

Figures 3B and 3C are views explaining the relationships between a carrier frequency and a multiplier output with respect to the voice signal (an output of the bandpass filter 203 of Fig. 3A).

In the figures, hatched portions represent aliasing noise components. When the multiplier output is filtered with a bandpass filter to a predetermined band, deterioration due to aliasing distortion occurs if a carrier frequency f' is low, as shown in Fig. 3C, and therefore, an optimum carrier frequency f is determined as shown in Fig. 3B.

According to this embodiment, carrier frequencies of the multipliers 211 to 215 are set as $f_1$ = 2.3 kHz, $f_2$ = 2.9 kHz, $f_3$ = 3.5 kHz, $f_4$ = 4.1 kHz and $f_5$ = 4.7 kHz and passbands of the bandpass filters 221 to 225 are set from 1.4 kHz to 2.0 kHz.

In this way, by setting the carriers $f_1$ to $f_5$ as low as possible, the center frequencies of the bandpass filters 221 to 225 may be lowered. Therefore, compared to the conventional system, if elliptic characteristics are used, two poles of the bandpass filters 221 to 225 may be omitted, thereby reducing the hardware. In the figure, hatched portions represent bandpass filter outputs corresponding to the respective channels ① to ⑤.

In the multipliers 231 to 235, the respective channels are modulated with the predetermined carriers $F_1$ to $F_5$ and then band-relocated.

In this embodiment, for the spectrum inversion and non-inversion processes of the respective channels, noninverting carriers and inverting carriers having different frequencies are used in the combinations shown in Table 1.

In Table 1, the noninverting carriers a (2.3 kHz) to e (4.7 kHz) are selected when the lower sidebands produced by the noninverting carriers are used for forming a noninverted scrambled voice signal; and the inverting carriers $\bar{a}$ (5.8 kHz) to $\bar{e}$ (8.2 kHz) are selected when the upper sidebands produced by the inverting carriers are used for forming an inverted scrambled voice. The frequencies of the inverting carriers are determined such that the higher harmonics produced by the noninverting carriers do not overlap the upper sidebands produced by the inverting carriers.

Table 2 shows examples of frequencies of the carriers $F_1$ to $F_5$ corresponding to the channels respectively, particularly without band-relocation.

Marks $\bar{c}$ and $\bar{d}$ represent inverting carriers. When the inverting carriers are used, the upper sidebands of the modulated signals are selected for forming scrambled signals.

<table>
<tr><td colspan="4" align="center">Table 1</td><td colspan="2" align="center">Table 2</td></tr>
<tr><td></td><td>Non-<br>Inverting<br>kHz</td><td colspan="2">Inverting<br><br>kHz</td><td>Carriers<br>for<br>channels</td><td>(kHz)</td></tr>
<tr><td>a</td><td>2.3</td><td>$\bar{a}$</td><td>5.8</td><td>$F_1$</td><td>a (2.3)</td></tr>
<tr><td>b</td><td>2.9</td><td>$\bar{b}$</td><td>6.4</td><td>$F_2$</td><td>b (2.9)</td></tr>
<tr><td>c</td><td>3.5</td><td>$\bar{c}$</td><td>7.0</td><td>$F_3$</td><td>$\bar{c}$ (7.0)</td></tr>
<tr><td>d</td><td>4.1</td><td>$\bar{d}$</td><td>7.6</td><td>$F_4$</td><td>$\bar{d}$ (7.6)</td></tr>
<tr><td>e</td><td>4.7</td><td>$\bar{e}$</td><td>8.2</td><td>$F_5$</td><td>e (4.7)</td></tr>
</table>

The band-relocating and inverting processes can be carried out by setting the carriers $F_1$ to $F_5$ to any one of frequencies a ($\bar{a}$) to e ($\bar{e}$).

The switching circuit 241 connects outputs of the multipliers 231, 232, and 235 corresponding to the channels ① , ② and ⑤ to the adder 251 for the noninverting process while connecting outputs of the multipliers 233 and 234 corresponding to the channels ③ and ④ to the adder 253 for the inversion process.

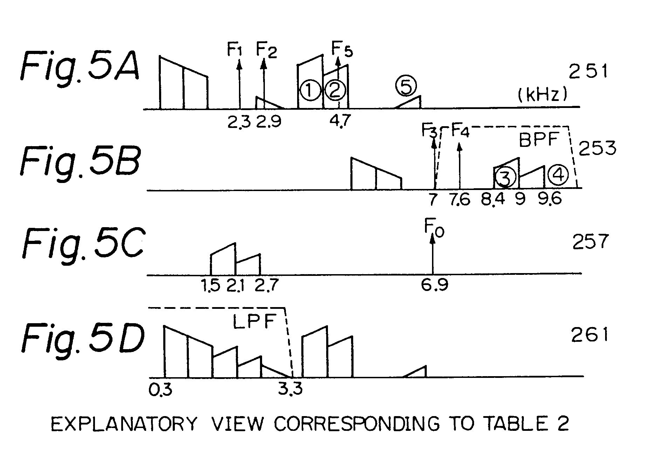

Figures 5A to 5D are views corresponding to Table 2 and explaining signal spectra after the adders 251 and 253.

Figure 5A shows an output of the adder 251, Fig. 5B an output of the adder 253, Fig. 5C an output of the multiplier 257 (an upper sideband (15.3 kHz to 16.5 kHz) of the channels ③ and ④ omitted), and Fig. 5D an output of the adder 261.

The output (Fig. 5B) of the adder 253 for the inversion process is input to the bandpass filter 255 in which the output is band-limited to 7.2 kHz to 10.2 kHz corresponding to an upper sideband of output signals modulated by the multipliers 231 to 235 (233 and 234 in this example) with inverted carriers $\bar{a}$ (5.8 kHz) to $\bar{e}$ (8.2 kHz) ($\bar{c}$ and $\bar{d}$ in this example), and then modulated to a base band by the multiplier 257 with a carrier $F_0$ (6.9 kHz) (Fig. 5C).

The adder 261 adds the output of the multiplier 257 (the added output (Fig. 5C) of the inverted channels) to the output of the adder 251 for the noninverting process (the added output (Fig. 5A) of the noninverted channels).

The output of the adder 261 (Fig. 5D) is filtered by the low-pass filter 271 and output as a required scrambled voice signal from the output terminal 273.

In the above description with reference to the Tables 1 and 2 and Figs. 5A to 5D, the inverting carriers of higher frequencies are employed to avoid adverse influences due to the higher harmonics produced by the noninverting carriers of the lower frequencies. The higher frequencies of the inverting carriers are necessary when the multipliers 231 to 235 are formed by simple ring modulators, because the higher harmonics of the modulated signals produced by the noninverting carriers may overlap the upper sidebands, i.e., the inverted bands of the modulated signals produced by the inverting carriers, if the inverting carriers are determined to be nearly equal to the noninverting carriers.

Nevertheless, when the multipliers 231 to 235 are formed by generally known analog multipliers, it is possible to make the frequencies of the inverting carriers the same as the frequencies f the noninverting carriers. In this case, also, the inverted signals are selected from the upper sidebands of the signals modulated by the carriers, and the noninverted signals are selected from the lower sidebands thereof.

When the frequencies of the inverting carriers are the same as those of the noninverting carriers, the carrier table will be as shown in Table 1a.

Table 1a

| Non-Inverting kHz | | Inverting kHz | |
|---|---|---|---|
| a | 2.3 | $\bar{a}$ | 2.3 |
| b | 2.9 | $\bar{b}$ | 2.9 |
| c | 3.5 | $\bar{c}$ | 3.5 |
| d | 4.1 | $\bar{d}$ | 4.1 |
| e | 4.7 | $\bar{e}$ | 4.7 |

Comparing Table 1a with Table 1, it can be seen that the number of carrier frequencies in Table 1a is half that in Table 1.

Instead of inverting the channels ③ and ④ , when the channels ② , ④ and ⑤ are to be inverted as in the conventional example shown in Fig. 19, the switching circuit 241 connects the outputs of the multipliers 231 and 233 corresponding to the channels ① and ③ to the adder 251 for the noninverting process while connecting outputs of the multipliers 232, 234 and 235 corresponding to the channels ② , ④ and ⑤ to the adder 253 for the inversion process. In this case, and when carriers are selected from the Table 1a, the Table 2 should be changed so that the frequencies of the carriers $F_2$ , $F_4$ and $F_5$ are $\bar{d}$ (4.1), $\bar{c}$ (3.5) and $\bar{a}$ (2.3) kHz. The Table 2 for this case is Table 2a, shown below. In this case also, marks $\bar{d}$, $\bar{c}$ and $\bar{a}$ represent inverting carriers.

Table 2a

| Carriers for channels | kHz |
|---|---|
| $F_1$ | e (4.7) |
| $F_2$ | $\bar{d}$ (4.1) |
| $F_3$ | b (2.9) |
| $F_4$ | $\bar{c}$ (3.5) |
| $F_5$ | $\bar{a}$ (2.3) |

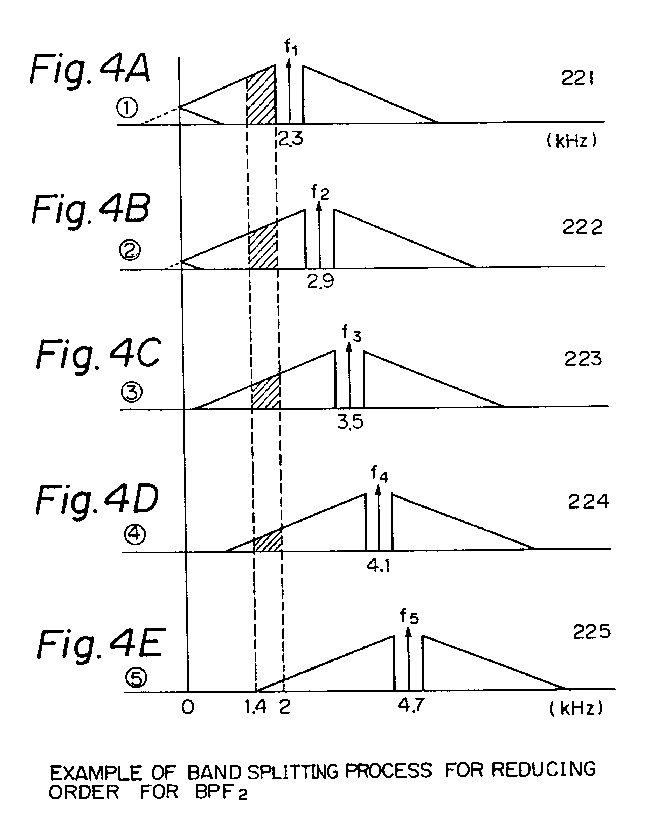

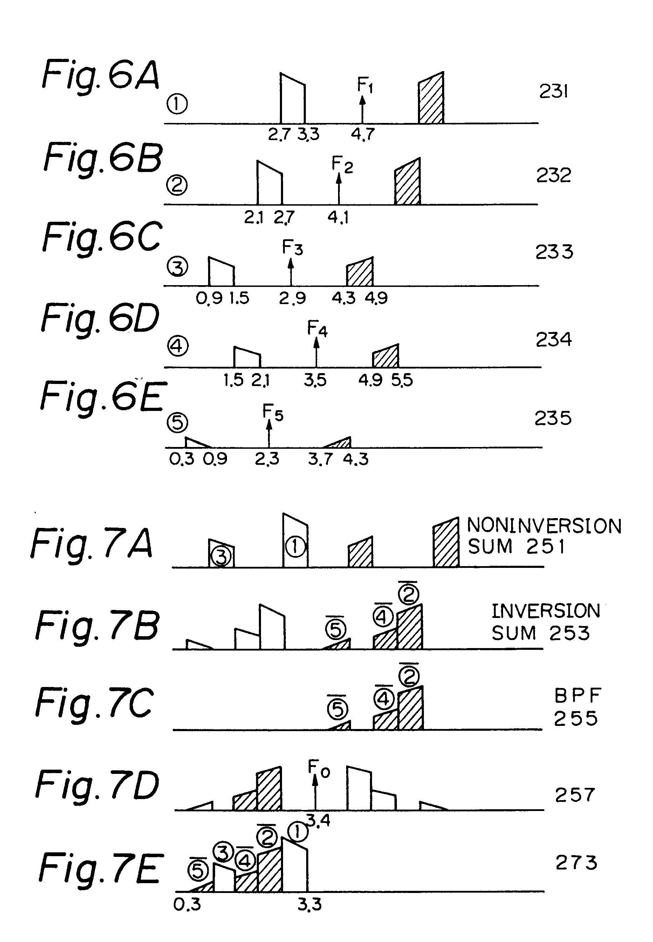

Figures 6A to 6E are views corresponding to Table 2a and explaining signal spectra at the outputs of the multiplexers 231 to 235. As shown in Fig. 6A, the hatched portion shown in Fig. 4A, which is the frequency band obtained by bandpass filter ($BPF_2$) 221, is modulated by the multiplier 231 with the carrier

frequency $F_1$ (4.7 kHz) so that a noninverted lower sideband from 2.7 kHz to 3.3 kHz and an inverted upper sideband from 7.1 kHz to 7.7 kHz are obtained. The inverted upper sideband is illustrated by hatching. Similarly, the channels ②, ③ and ⑤ are modulated by the multipliers 231 to 235 with the carrier frequencies $F_2$ (4.1 kHz), $F_3$ (2.9 kHz), $F_4$ (3.5 kHz), and $F_5$ (2.3 kHz) respectively.

Figures 7A to 7E are views corresponding to Table 2a and explaining signal spectra after the adders 251 and 253.

Figure 7A shows an output of the adder 251; Fig. 7B an output of the adder 253; Fig. 7C an output of the bandpass filter 255; Fig. 7D an output of the multiplexer 257; and Fig. 7E an output of the adder 261. As can be seen from Fig. 7C, the bandpass filter (BPF) 255 passes the upper sideband of the output of the adder 253 so that only the inverted sidebands ②, ④ and ⑤ are obtained and the lower sidebands ②, ④ and ⑤ are deleted. The inverted sidebands are then modulated by the multiplier 257 with a carrier $F_0$ (3.4 kHz) so that the inverted sidebands are relocated from the frequency band ranging from 4.2 kHz to 6.6 kHz to the frequency band ranging from 0.3 kHz to 2.6 kHz, as shown in Fig. 7D.

As described above, it will be apparent that, compared to the conventional constitution in which a spectrum inverting process and a spectrum relocating process for each channel are performed separately, the embodiment of the present invention simplifies the constitution of the multipliers, etc., by separately synthesizing the noninverted channels and the inverted channels and collectively performing an inverting process to synthesize a voice scrambled signal when the band relocating process is effected.

The inverting carrier frequency combination shown in Table 1 is for using an upper sideband of the added output of the inverted channels (Fig. 5B). The non-inverting carrier combination is for using a lower sideband.

Table 3 shows an example of combination of the same frequencies as shown in Table 1 for noninverting carriers and different frequencies for using the lower sideband of the added output of the inverted channel. Namely, the arrangement of the inverting carriers is opposite to the arrangement shown in Table 1.

Table 4 shows examples of frequencies of the carriers $F_1$ to $F_5$ corresponding to the channels, particularly without band relocation. Marks $\bar{c}$ and $\bar{d}$ represent inverting carriers respectively.

Table 3

| | | Non-inverting kHz | Inverting kHz |
|---|---|---|---|
| | a | 2.3 | 8.2 |
| | b | 2.9 | 7.6 |
| | c | 3.5 | 7.0 |
| | d | 4.1 | 6.4 |
| | e | 4.7 | 5.8 |

Table 4

| Carriers for channels | (kHz) |
|---|---|
| $F_1$ | a (2.3) |
| $F_2$ | b (2.9) |
| $F_3$ | $\bar{c}$ (7.0) |
| $F_4$ | $\bar{d}$ (6.4) |
| $F_5$ | e (4.7) |

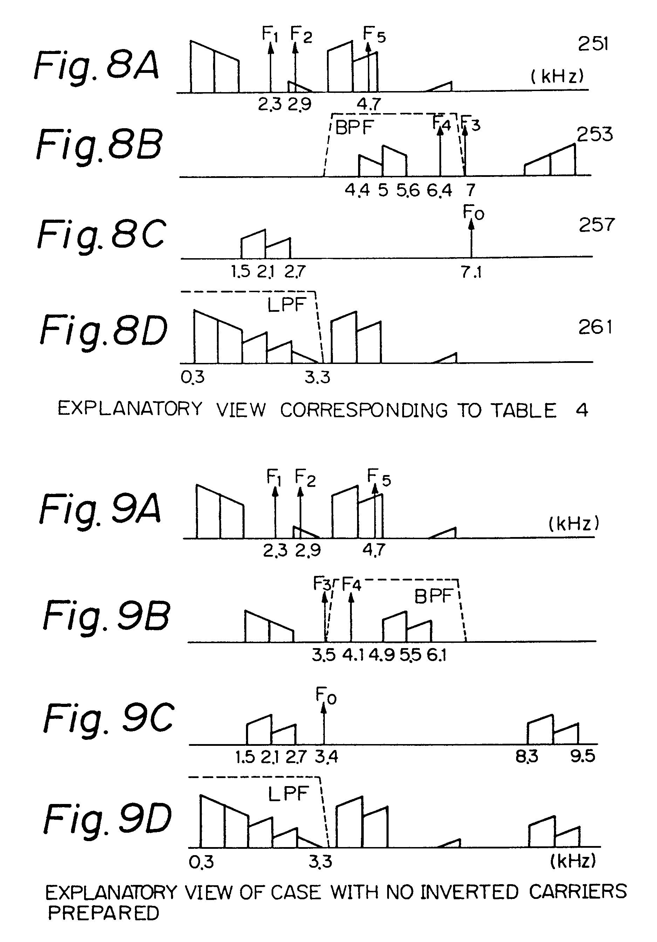

Figure 8A to 8D are views corresponding to Table 4 and explaining signal spectra after the adders 251 and 253.

Figure 8A shows an output of the adder 251, Fig. 8B an output of the adder 253, Fig. 8C an output of the multiplier 257 (an upper sideband (11.5 kHz to 12.7 kHz) of the channels ③ and ④ omitted), and Fig. 8D an output of the adder 261.

The output (Fig. 8B) of the adder 253 for the inverting process is input to the bandpass filter 255 in which the output is band-limited to 3.8 kHz to 6.8 kHz corresponding to a lower sideband of output signals modulated in the multipliers 231 to 235 with inverting carriers $\bar{a}$ (8.2 kHz) to $\bar{e}$ (5.8 kHz), and then modulated to a base band by the multiplier 257 with a carrier $F_0$ (7.1 kHz) (Fig. 8C).

Similarly, the adder 261 adds the output of the multiplier 257 (the added output (Fig. 8C) of the inverted channels) to the output of the noninverting process adder 251 (the added output (Fig. 8A) of the normal channels). The added output (Fig. 8D) is filtered by the low-pass filter 271 and output as a required voice scrambled signal from the output terminal 273.

In the combinations of carrier frequencies shown in Tables 1 and 3, for example, an inverting carrier band may be set optionally (from 5.8 kHz to 8.2 kHz in tables 1 and 3). By properly adjusting the carrier $F_0$ of the multiplier 257, the noninverted and inverted channels can be synthesized. Here, to simplify the constitution of the oscillator 281, a part of the inverting carriers is set to a frequency which is double the frequency of a noninverting carrier.

By using the multipliers 211 to 215, 231 to 235 and 257 having proper circuit constitutions, an inversion process at a relatively low frequency will be realized. In this case, inverting carriers are not particularly necessary and the same process may be carried out only with the switching circuit 241, to generate the voice scrambled signal.

Figures 9A to 9D are views explaining a process in which inverting carriers are not used. Figure 9A shows an output of the adder 251, Fig. 9B an output of the adder 253, Fig. 9C an output of the multiplier 257, and Fig. 9D an output of the adder 261.

In this case, the carrier $F_0$ of the multiplier 257 is 3.4 kHz.

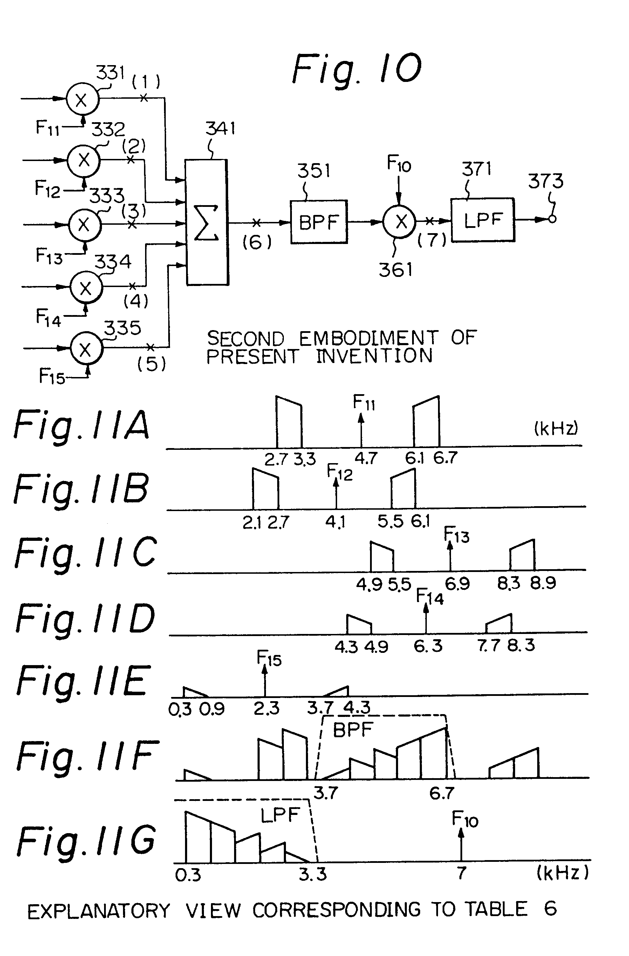

Figure 10 is a block diagram showing an essential constitution of a second embodiment of the present invention.

A constitution for splitting the band of an input speech signal is the same as that for the first embodiment of the present invention, and thus is omitted from the figure.

In the figure, carriers $F_{11}$ to $F_{15}$ having different frequencies respectively are input to multipliers 331 to 335 corresponding to respective channels, respective outputs of the multipliers 331 to 335 are input to an adder 341, an output of the adder 341 is input to a multiplier 361 through a bandpass filter (BPF) 351, and an output multiplied by the carrier $F_{10}$ of the multiplier 361 is sent to an output terminal 373 through a low-pass filter (LPF) 371.

Here, the modulating means 15 shown in the block diagram (Fig. 1) of the principle of the embodiment of the present invention corresponds to the multipliers 331 to 335 of this embodiment (Fig. 10). Similarly, the adding means 17 corresponds to the adder 341, bandpass filter 351, multiplier 361, and low-pass filter 371.

A feature of this embodiment is that the bands of noninverting and inverting carriers are set such that, for example, the band of an upper sideband of a signal modulated with the noninverting carrier coincides with the band of a lower sideband of a signal modulated with the inverting carrier.

Table 5 shows examples of combinations of carrier frequencies which have been set in the above-mentioned relationship.

| Table 5 | | | | Table 6 | |
|---|---|---|---|---|---|
| | Normal | Inverting | | Carriers for | |
| | kHz | kHz | | channels | (kHz) |
| a | 4.7 | 8.1 | | $F_{11}$ | a (4.7) |
| b | 4.1 | 7.5 | | $F_{12}$ | b (4.1) |
| c | 3.5 | 6.9 | | $F_{13}$ | c̄ (6.9) |
| d | 2.9 | 6.3 | | $F_{14}$ | d̄ (6.3) |
| e | 2.3 | 5.7 | | $F_{15}$ | e (2.3) |

Table 6 shows, as indicated with respect to the first embodiment, examples of frequencies of the carriers $F_{11}$ to $F_{15}$ corresponding to the channels, particularly without band relocation.

Figure 11 is a view corresponding to Table 6 and explaining signal spectra after the multipliers 331 to 335. Figures 11A to 11E show respective outputs of the multipliers 331 to 335, Fig. 11F an output of the adder 341, and Fig. 11G an output of the multiplier 361 (an upper sideband (10.7 kHz to 13.7 kHz) is omitted).

As shown in Fig. 11, if the noninverting and inverting carriers have the above-mentioned relationship, it is not necessary to separate a noninverting route and an inverting route corresponding to channels by a switching circuit. By setting a passband of the bandpass filter 351 from 3.7 kHz to 6.7 kHz, and by setting the carrier $F_{10}$ of the multiplier 361 to 7 kHz, a scrambled voice signal modulated to a base band (0.3 kHz to 3.3 kHz) is obtained.

As described above, it is necessary only to finally modulate the signal to the base band with the carrier $F_{10}$ of the multiplier 361, and the frequency band (2.3 kHz to 4.7 kHz) of the normal carrier shown here is not definitive.

For example, a passband of the bandpass filter ($BPF_2$) is generally assumed to be from $\underline{m}$ to $\underline{n}$ (kHz) (where $\underline{\ \ } = \underline{m} + \underline{n}$), and a frequency band of the noninverting carrier is assumed to be from $\overline{\underline{p}}$ to $\overline{\underline{p} + \alpha} -$ (kHz). Then a frequency band of the inverting carrier will be form $\underline{p} \pm \underline{\ \ }$ to $\underline{p} + \alpha \pm \underline{\ \ }$ (kHz), and thus will be realized by properly setting the carrier $F_{10}$ of the multiplier 361.

As described with reference to the first and second embodiments, the present invention reduces the amount of hardware (for example, multipliers) for the band relocation and spectrum inversion processes by adjusting carrier frequencies. For example, in the conventional system shown in Fig. 13, 15 multipliers and 12 bandpass filters must be provided, whereas, in the embodiment of the present invention shown in Fig. 2, only 11 multipliers and 8 bandpass filters are necessary.

Although the above embodiments have dealt with five channels, the present invention is applicable even if the number of channels (the number of divided bands) is increased. In this case, the reduction of the hardware required is remarkable.

As described above, according to the present invention, by properly selecting carriers for band relocation and by collectively performing a spectrum inverting process and a band relocating process, the number of multipliers may be reduced, for example, from fifteen to eleven in the case of five channels, thereby reducing the number of poles of bandpass filters shown in the embodiments, to simplify the hardware. If the number of band-divided-channels is increased, a further reduction of the hardware is realized to remarkably improve the practicability of the apparatus.

**Claims**

1. A voice band splitting scrambler, comprising:
   band splitting means (11) for splitting an input voice signal into a plurality of band channels; and
   a scrambled voice signal generating means (13) for carrying out spectrum-inverting and band-relocating operations on the respective channels to generate a scrambled voice signal,
   said scrambled voice signal generating means (13) including:
   modulating means (15) for band-relocating respective channels by noninverting carriers or inverting carriers set in different bands respectively; and
   adding means (17) for adding signals of noninverted channels and signals of inverted channels to each other, characterized by means (253,255,257) for modulating a sum of a plurality of inverted channel signals, or means (341,351,371) for modulating a sum of a plurality of inverted and non-inverted channel signals.

2. A voice band splitting scrambler as claimed in claim 1, wherein said band splitting means (11) comprises:
   a plurality of frequency modulating means (211 - 215) for modulating the input voice signal by an integer multiple of the split band width, and
   bandpass filters (221 - 225) each for passing a predetermined band signal from each output of said frequency modulating means.

3. A voice band splitting scrambler as claimed in claim 2, wherein said plurality of frequency modulating means (211 - 215) utilize carrier frequencies for modulating respective frequency bands, caused by splitting the frequency band of the input speech signal, to lower frequency sides.

4. A voice band splitting scrambler as claimed in claim 3, wherein said carrier frequencies are selected so that, when an upper frequency band is relocated to a lower frequency band, the input voice signal is

EP 0 300 464 B1

not superposed on the reflected signal of the lower frequency band.

5. A voice band splitting scrambler as claimed in claim 2, wherein said plurality of bandpass filters pass a same frequency band.

6. A voice band splitting scrambler as claimed in claim 1, wherein said adding means (17) comprises:
   a first adding means (251) for adding the signals of the noninverted channels;
   a second adding means (253) for adding the signals of the inverted channels;
   a modulating means (257) for modulating at least one of the added signals; and
   a means (261) for adding the output of said first or second adding means and the output of said modulating means to form a continuous spectrum.

7. A voice band splitting scrambler as claimed in claim 1, wherein said noninverting carriers and said inverting carriers are so determined that the upper side band of the signal modulated by said noninverting carriers coincides with the lower side band of the signal modulated by said inverting carriers.

8. A voice band splitting scrambler comprising:
   a first n-frequency modulating means (211 - 215) for modulating an input analog voice signal into respective different frequencies;
   first bandpass filters (BPF) for passing predetermined band signals from the respective outputs of said first n-frequency modulating means,
   a second n-frequency modulating means (231 - 235) for modulating the respective output signals of said bandpass filters (BPF),
   a switching means (241) for separately outputting noninverted signals and inverted signals from the output signals of said second n-frequency modulating means,
   a first adding means (251) for adding the noninverting signals output from said switching means,
   a second adding means (253) for adding the inverted signals output from said switching means,
   a second bandpass filter (255) for filtering the output of said second adding means (253),
   a third modulating means (257) for frequency modulating the output from said second bandpass filter, and
   a third adding means for adding the noninverted signals and the signals output from said third frequency modulating means to output the added signals.

9. A voice band splitting scrambler comprising:
   a first n-frequency modulating means (211 - 215) for modulating input analog voice signals into respective different frequencies,
   first bandpass filters (BPF) for passing predetermined band signals from the respective outputs of said first n-frequency modulating means,
   second n-frequency modulating means (331 - 335) for modulating the respective output signals of said bandpass filters (BPF),
   adding means (341) for adding the outputs of said second n-frequency modulating means,
   a second bandpass filter (351) for filtering the output of said adding means (341),
   a third modulating means (361) for frequency modulating the output of said second bandpass filter, and
   a low-pass filter (371) for passing a predetermined relocated signal within the input voice band width from the output signal of said third frequency modulating means.

10. A voice band splitting scrambler as claimed in claims 8 or 9 wherein said first frequency modulating means (211 - 215) is arranged to utilize modulating frequencies for relocating the input analogue speech signal to lower frequency sides.

11. A voice band splitting scrambler as claimed in claim 10, wherein the modulating means are arranged to use modulating frequencies which are determined to be integer multiples of 1/n of the input voice band width.

12. A voice band splitting scrambler as claimed in claim 11, wherein the modulating means is operable to relocate bands so that when an upper band of 1/n split of said input voice band is relocated to a lower

11

band, the reflected signal is not superposed on the original signal.

13. A voice band splitting scrambler as claimed in claims 8 or 9, wherein said bandpass filters have a same frequency band characteristic.

14. A voice band splitting scrambler as claimed in claims 8 or 9, wherein said second frequency modulating means is arranged to utilize a direct current as a modulating signal when the noninverted signal is to be obtained, and to utilize a signal having a predetermined frequency as a modulating signal when the inverted signal is to be obtained.

15. A voice band splitting scrambler as claimed in claims 8 or 9, wherein said second frequency modulating means includes means for controlling the amounts of shift in the relocation of the frequency band by predetermined data.

16. A voice band splitting scrambler as claimed in claim 15 wherein the switching means is controlled so that the output signals of the inverted signal bands modulated by said second frequency modulating means are collected.

**Patentansprüche**

1. Sprachband-Spaltungsscrambler, umfassend:
   - eine Bandspalteinrichtung (11) zum Spalten eines Eingangssprachsignals in eine Vielzahl von Bandkanälen; und
   - eine Einrichtung (13) zur Erzeugung eines gescrambelten Sprachsignals zum Ausführen von Spektruminversions- und Bandneuordnungsvorgängen an den entsprechenden Kanälen, um ein gescrambeltes Sprachsignal zu erzeugen,
   wobei die Einrichtung zur Erzeugung eines gescrambelten Sprachsignals (13) umfaßt:
   - eine Moduliereinrichtung (15) zum Bandneuordnen jeweiliger Kanäle durch nichtinvertierende Träger bzw. invertierende Träger, die in verschiedenen Bändern angeordnet sind; und
   - eine Addiereinrichtung (17) zum Addieren von Signalen nichtinvertierter Kanäle und Signalen invertierter Kanäle zueinander,
   gekennzeichnet durch
   - Einrichtungen (253, 255, 257) zum Modulieren einer Summe einer Vielzahl von invertierten Kanalsignalen, oder Einrichtungen (341, 351, 371) zum Modulieren einer Summe aus einer Vielzahl von invertierten oder nichtinvertierten Kanalsignalen.

2. Sprachband-Spaltungsscrambler nach Anspruch 1, dadurch gekennzeichnet, daß die Bandspaltungseinrichtung (11) umfaßt:
   - eine Vielzahl von Erequenzmoduliereinrichtungen (211-215) zum Modulieren des Eingabesprachsignals durch ein ganzzeiliges Vielfaches der Spaltbandbreite, und
   - Bandpaßfilter (221-225), jeweils zum Obermitteln eines vorbestimmten Bandsignals aus jeder Ausgabe der Frequenzmoduliereinrichtung.

3. Sprachband-Spaltungscrambler nach Anspruch 2, dadurch gekennzeichnet, daß die Vielzahl von Frequenzmoduliereinrichtungen (211-215) Trägerfrequenzen zum Modulieren jeweiliger Frequenzbänder verwendet, bedingt durch Spaltten des Frequenzbandes des Eingabesprachsignals zu den Seiten niedrigerer Frequenz.

4. Sprachband-Spaltungsscrambler nach Anspruch 3, dadurch gekennzeichnet, daß die Trägerfrequenzen so gewählt sind, daß wenn ein oberes Frequenzband auf ein niedrigeres Frequenzband umgeordnet wird, das Eingabesprachsignal nicht auf das reflektierte Signal des niedrigeren Frequenzbandes überlagert wird.

5. Sprachband-Spaltungsscrambler nach Anspruch 2, dadurch gekennzeichnet, daß die Vielzahl von Bandpaßfiltern ein gleiches Frequenzband durchlassen.

6. Sprachband-Spaltungsscrambler nach Anspruch 1, dadurch gekennzeichnet, daß die Addiereinrichtung (17) umfaßt:

- eine erste Addiereinrichtung (251) zum Addieren der Signale der nichtinvertierten Kanäle;
- eine zweite Addiereinrichtung (253) zum Addieren der Signale der invertierten Kanäle;
- eine Moduliereinrichtung (257) zum Modulieren mindestens eines der addierten Signale; und
- eine Einrichtung (261) zum Addieren der Ausgabe der ersten oder zweiten Addiereinrichtung und der Ausgabe der Moduliereinrichtung, um ein kontinuierliches Spektrum zu bilden.

7. Sprachband-Spaltungstscrambler nach Anspruch 1, dadurch gekennzeichnet, daß die nichtinvertierenden Träger und die invertierenden Träger so bestimmt sind, daß das obere Seitenband des Signals, welches durch die nichtinvertierenden Träger moduliert ist, mit dem unteren Seitenband des Signals zusammenfällt, das durch die invertierenden Träger moduliert ist.

8. Sprachband-Spaltungsscrambler , umfassend:
- eine erste n-Frequenz-Moduliereinrichtung (211-215) zum Modulieren eines Eingabe-Analogsprachsignals in entsprechende verschiedene Frequenzen;
- erste Bandpaßfilter (BPF) zum Durchlassen vorbestimmter Bandsignale aus den jeweiligen Ausgaben der ersten n-Frequenz-Moduliereinrichtung,
- eine zweite n-Frequenz-Moduliereinrichtung (231-235) zum Modulieren der entsprechenden Ausgabesignale der Bandpaßfilter (BPF),
- eine Schalteinrichtung (241) zum wahlweisen Ausgeben nichtinvertierter Signale und invertierter Signale aus den Ausgabesignalen der zweiten n-Frequenz-Moduliereinrichtung,
- eine erste Addiereinrichtung (251) zum Addieren der nichtinvertierenden Signale, die von der Schalteinrichtung ausgegeben werden,
- eine zweite Addiereinrichtung (253) zum Addieren der invertierten Signale, die von der Schalteinrichtung ausgegeben werden,
- einen zweiten Bandpaßfilter (255) zum Filtern der Ausgabe der zweiten Addiereinrichtung (253),
- eine dritte Moduliereinrichtung (257) zum Frequenzmodulieren der Ausgabe des zweiten Bandpaßfilters, und
- eine dritte Addiereinrichtung zum Addieren der nichtinvertierten Signale und der Signale, die von der dritten Frequenz-Moduliereinrichtung ausgegeben werden, um die addierten Signale auszugeben.

9. Sprachband-Spaltungsscrambler umfassend:
- eine erste n-Frequenz-Moduliereinrichtung (211-215) zum Modulieren von Eingabe-Analogsprachsignalen in jeweilige verschiedene Frequenzen,
- erste Bandpaßfilter (BPF) zum Durchlassen vorbestimmter Bandsignale aus den entsprechenden Ausgaben der ersten n-Frequenz-Moduliereinrichtung,
- eine zweite n-Frequenz-Moduliereinrichtung (331-335) zum Modulieren entsprechender Ausgabesignale der Bandpaßfilter (BPF),
- eine Addiereinrichtung (341) zum Addieren der Ausgaben der zweiten n-Frequenz-Moduliereinrichtung,
- einen zweiten Bandpaßfilter (351) zum Filtern der Ausgabe der Addiereinrichtung (341),
- eine dritte Moduliereinrichtung (361) zum Frequenzmodulieren der Ausgabe der zweiten Bandpaßfilter, und
- einen Tiefpaßfilter (371) zum Übertragen eines vorbestimmten neugeordneten Signals innerhalb der neugeordneten Eingabe-Sprachbandbreite aus dem Ausgabesignal der dritten Frequenz-Moduliereinrichtung.

10. Sprachband-Spaltungsscrambler nach Anspruch 8 oder 9, dadurch gekennzeichnet, daß die erste Frequenzmoduliereinrichtung (211 - 215) so angeordnet ist, daß sie modulierende Frequenzen zum Neuordnen des Eingabeanalogsprachsignals zu Seiten niedrigerer Frequenz verwendet.

11. Sprachband-Spaltungsscrambler nach Anspruch 10, dadurch gekennzeichnet, daß die Moduliereinrichtung so angeordnet ist, daß sie Modulierfrequenzen verwendet, welche durch ganzzalige Vielfachen von 1/n der Eingabesprachbandbreite bestimmt sind.

12. Sprachband-Spaltungsscrambler nach Anspruch 11, dadurch gekennzeichnet, daß die Moduliereinrichtung betrieben werden kann, um Bänder so neuzuordnen, daß wenn ein oberes Band mit 1/n Spalt des Eingabesprachbandes auf ein niedrigeres Band umgeordnet wird, das reflektierte Signal dem Originalsignal nicht überlagert wird.

**13.** Sprachband-Spaltungsscrambler nach Anspruch 8 oder 9, dadurch gekennzeichnet, daß die Bandpaßfilter eine gleiche Frequenzbandcharakteristik haben.

**14.** Sprachband-Spaltungsscrambler nach Anspruch 8 oder 9, dadurch gekennzeichnet, daß die zweite Frequenzmoduliereinrichtung so angeordnet ist, daß sie einen direkten Strom als Moduliersignal verwendet, wenn das nichtinvertierte Signal erhalten werden soll, und ein Signal mit einer vorbestimmten Frequenz als modulierendes Signal verwendet wird, wenn das invertierte Signal erhalten werden soll.

**15.** Sprachband-Spaltungsscrambler nach Anspruch 8 oder 9, dadurch gekennzeichnet, daß die zweite Frequenzmoduliereinrichtung Einrichtungen zur Steuerung der Größe der Verschiebung des Frequenzbandes durch vorbestimmte Daten umfaßt.

**16.** Sprachband-Spaltungsscrambler nach Anspruch 15, dadurch gekennzeichnet, daß die Umschalteinrichtung so gesteuert wird, daß die Ausgabesignale der invertierten Signalbänder durch die zweite Frequenzmoduliereinrichtung gesammelt werden.

**Revendications**

**1.** Brouilleur à découpage de bande vocale comprenant :

un moyen de découpage de bande (11) pour découper un signal vocal d'entrée en une pluralité de canaux de bande ; et

un moyen de génération de signal vocal brouillé (13) pour mettre en oeuvre des opérations d'inversion de spectre et de relocalisation de bande sur les canaux respectifs afin de générer un signal vocal brouillé,

ledit moyen de génération de signal vocal brouillé (13) incluant :

un moyen de modulation (15) pour relocaliser en bande des canaux respectifs au moyen de porteuses de non inversion ou de porteuses d'inversion établies respectivement dans des bandes différentes ; et

un moyen d'addition (17) pour additionner des signaux de canaux non inversés et des signaux de canaux inversés les uns aux autres, caractérisé par un moyen (253, 255, 257) pour moduler une somme d'une pluralité de signaux de canaux inversés ou par un moyen (341, 351, 371) pour moduler une somme d'une pluralité de signaux de canaux inversés et non inversés.

**2.** Brouilleur à découpage de bande vocale selon la revendication 1, dans lequel ledit moyen de découpage de bande (11) comprend :

une pluralité de moyens de modulation de fréquence (211-215) pour moduler le signal vocal d'entrée par un multiple entier de la largeur de bande découpée ; et

des filtres passe-bande (221-225), chacun pour laisser passer un signal de bande prédéterminé en provenance de chaque sortie desdits moyens de modulation de fréquence.

**3.** Brouilleur à découpage de bande vocale selon la revendication 2, dans lequel ladite pluralité de moyens de modulation de fréquence (211-215) utilise des fréquences de porteuse pour moduler des bandes de fréquence respectives, lesquelles sont générées par le découpage de la bande de fréquence du signal de conversation d'entrée, afin d'abaisser des côtés de fréquence.

**4.** Brouilleur à découpage de bande vocale selon la revendication 3, dans lequel lesdites fréquences de porteuse sont sélectionnées de telle sorte que lorsqu'une bande de fréquence supérieure est relocalisée selon une bande de fréquence inférieure, le signal vocal d'entrée ne soit pas superposé sur le signal réfléchi de la bande de fréquence inférieure.

**5.** Brouilleur à découpage de bande vocale selon la revendication 2, dans lequel ladite pluralité de filtres passe-bande laisse passer une même bande de fréquence.

14

**6.** Brouilleur à découpage de bande vocale selon la revendication 1, dans lequel ledit moyen d'addition (17) comprend :

un premier moyen d'addition (251) pour additionner les signaux des canaux non inversés ;

un second moyen d'addition (253) pour additionner les signaux des canaux inversés ;

un moyen de modulation (257) pour moduler au moins l'un des signaux additionnés ; et

un moyen (261) pour additionner la sortie desdits premier et second moyens d'addition et la sortie dudit moyen de modulation pour former un spectre continu.

**7.** Brouilleur à découpage de bande vocale selon la revendication 1, dans lequel lesdites porteuses de non inversion et lesdites porteuses d'inversion sont déterminées de telle sorte que la bande de côté supérieur du signal modulé par lesdites porteuses de non inversion coïncide avec la bande de côté inférieur du signal modulé par lesdites porteuses d'inversion.

**8.** Brouilleur à découpage de bande vocale comprenant :

un premier moyen de modulation en n fréquences (211 - 215) pour moduler un signal vocal analogique d'entrée en des fréquences différentes respectives ;

des premiers filtres passe-bande ($FPB_a$) pour laisser passer des signaux de bande prédéterminés en provenance des sorties respectives desdits premiers moyens de modulation en n fréquences ;

un second moyen de modulation en n fréquences (231-235) pour moduler les signaux de sortie respectifs desdits filtres passe-bande ($FBP_a$) ;

un moyen de commutation (241) pour émettre en sortie séparément des signaux non inversés et des signaux inversés à partir des signaux de sortie dudit second moyen de modulation en n fréquences ;

un premier moyen d'addition (251) pour additionner des signaux de non inversion émis en sortie depuis ledit moyen de commutation ;

un second moyen d'addition (253) pour additionner les signaux inversés émis en sortie depuis ledit moyen de commutation ;

un second filtre passe-bande (255) pour filtrer la sortie dudit second moyen d'addition (253) ;

un troisième moyen de modulation (257) pour moduler en fréquence la sortie dudit second filtre passe-bande ; et

un troisième moyen d'addition pour additionner les signaux non inversés et les signaux émis en sortie depuis ledit troisième moyen de modulation de fréquence afin d'émettre en sortie des signaux additionnés.

**9.** Brouilleur à découpage de bande vocale comprenant :

un premier moyen de modulation en n fréquences (211 - 215) pour moduler des signaux vocaux analogiques d'entrée selon différentes fréquences respectives ;

des premiers filtres passe-bande ($FPB_a$) pour laisser passer des signaux de bande prédéterminés en provenance des sorties respectives desdits premiers moyens de modulation en n fréquences ;

un second moyen de modulation en n fréquences (331-335) pour moduler des signaux de sortie respectifs desdits filtres passe-bande ($FPB_a$) ;

un moyen d'addition (341) pour additionner les sorties dudit second moyen de modulation en n fréquences ;

un second filtre passe-bande (351) pour filtrer la sortie dudit moyen d'addition (341) ;

un troisième moyen de modulation (361) pour moduler en fréquence la sortie dudit second filtre passe-bande ; et

un filtre passe-bas (371) pour laisser passer un signal relocalisé prédéterminé selon la largeur de bande vocale d'entrée en provenance du signal de sortie dudit troisième moyen de modulation de fréquence.

**10.** Brouilleur à découpage de bande vocale selon la revendication 8 ou 9, dans lequel ledit premier moyen de modulation de fréquence (211-215) est agencé afin d'utiliser des fréquences de modulation pour relocaliser le signal de conversation analogique d'entrée vers des côtés de fréquences inférieures.

**11.** Brouilleur à découpage de bande vocale selon la revendication 10, dans lequel les moyens de modulation sont agencés pour utiliser des fréquences de modulation qui sont déterminées comme étant des multiples entiers de 1/n de la largeur de la bande vocale d'entrée.

**12.** Brouilleur à découpage de bande vocale selon la revendication 11, dans lequel le moyen de modulation peut être activé pour relocaliser des bandes de telle sorte que lorsqu'une bande supérieure d'une découpe de 1/n de ladite bande vocale d'entrée est relocalisée selon une bande inférieure, le signal réfléchi ne soit pas superposé sur le signal original.

**13.** Brouilleur à découpage de bande vocale selon la revendication 8 ou 9, dans lequel lesdits filtres passe-bande présentent une même caractéristique de bande de fréquence.

**14.** Brouilleur à découpage de bande vocale selon la revendication 8 ou 9, dans lequel ledit second moyen de modulation de fréquence est agencé pour utiliser un courant continu en tant que signal de modulation lorsque le signal non inversé doit être obtenu et pour utiliser un signal présentant une fréquence prédéterminée en tant que signal de modulation lorsque le signal inversé doit être obtenu.

**15.** Brouilleur à découpage de bande vocale selon la revendication 8 ou 9, dans lequel ledit second moyen de modulation de fréquence inclut un moyen pour commander les valeurs de décalage lors de la relocalisation de la bande de fréquence au moyen de données prédéterminées.

**16.** Brouilleur à découpage de bande vocale selon la revendication 15, dans lequel le moyen de commutation est commandé de telle sorte que les signaux de sortie des bandes de signaux inversés modulés par ledit second moyen de modulation de fréquence soient collectés.

Fig. I

BAND SPLITTING MEANS

MODULATING MEANS

ADDING MEANS S

SECRET SPEECH SIGNAL GENERATING MEANS

NORMAL CARRIER

a b

INVERTED CARRIER

$\overline{a}$ $\overline{b}$

11

13

15

17

BLOCK DIAGRAM OF PRINCIPLE OF EMBODIMENT OF PRESENT INVENTION

Fig. 2

FIRST EMBODIMENT OF PRESENT INVENTION

*Fig. 3A*

*Fig. 3B*

*Fig. 3C*

RELATIONS BETWEEN CARRIER FREQUENCIES
AND MULTIPLIER OUTPUTS

EP 0 300 464 B1

EXAMPLE OF BAND SPLITTING PROCESS FOR REDUCING ORDER FOR BPF$_2$

20

Fig.5A

Fig.5B

Fig.5C

Fig.5D

EXPLANATORY VIEW CORRESPONDING TO TABLE 2

Fig. 6A

① $F_1$

231

2.7 3.3 4.7

Fig. 6B

② $F_2$

232

2.1 2.7 4.1

Fig. 6C

③ $F_3$

233

0.9 1.5 2.9 4.3 4.9

Fig. 6D

④ $F_4$

234

1.5 2.1 3.5 4.9 5.5

Fig. 6E

⑤ $F_5$

235

0.3 0.9 2.3 3.7 4.3

Fig. 7A

③ ①

NONINVERSION
SUM 251

Fig. 7B

$\overline{⑤}$ $\overline{④}$ $\overline{②}$

INVERSION
SUM 253

Fig. 7C

$\overline{⑤}$ $\overline{④}$ $\overline{②}$

BPF
255

Fig. 7D

$F_0$

257

Fig. 7E

$\overline{⑤}$ ③ $\overline{④}$ $\overline{②}$ ① 3.4

273

0.3 3.3

Fig. 8A

Fig. 8B

Fig. 8C

Fig. 8D

EXPLANATORY VIEW CORRESPONDING TO TABLE 4

Fig. 9A

Fig. 9B

Fig. 9C

Fig. 9D

EXPLANATORY VIEW OF CASE WITH NO INVERTED CARRIERS PREPARED

Fig. 10

SECOND EMBODIMENT OF PRESENT INVENTION

Fig. 11A

Fig. 11B

Fig. 11C

Fig. 11D

Fig. 11E

Fig. 11F

Fig. 11G

EXPLANATORY VIEW CORRESPONDING TO TABLE 6

## Fig. 12

A

0.25   0.8   1.35   1.9   2.45   3   (kHz)

B

0.25                                  3   (kHz)

OUTLINE OF BAND SPLITTING AND
RELOCATING SYSTEM

## Fig. 13

CONSTITUTION OF PRIOR ART

# Fig. 14

EXAMPLE OF OUTPUT SPECTRUM OF $BPF_{11}$

Fig. 16A

Fig. 16B

Fig. 16C

EXPLANATORY VIEW OF CONVENTIONAL NONINVERTING
AND INVERTING PROCESSES

# Fig. 18

EXAMPLES OF OUTPUT SPECTRA OF MULTIPLIERS 611 TO 615

Fig.17A ①

$f_{1R} = 0\ Hz$

Fig.17B ②

$f_{2R} = 7.05\ kHz$    10.3  10.85    kHz

Fig.17C ③

$f_{3R} = 0\ Hz$

Fig.17D ④

$f_{4R} = 7.05\ kHz$

Fig.17E ⑤

$f_{5R} = 7.05\ kHz$

3250Hz    3800Hz

Fig.19A ① 651

f₁ₚ at $f_{1P}$
250    3000    6250

Fig.19B ② 652

$f_{2P}$
5150

Fig.19C ③ 653

$f_{3P}$
5700

Fig.19D ④ 654

$f_{4P}$
4600

Fig.19E ⑤ 655

$f_{5P}$
4050

Fig.19F 661

⑤ ③ ④ ② ①
250    3000    5100    7850    Hz

Fig.19G 673

⑤ ③ ④ ② ①
250    3000

EP 0 300 464 B1